# FASCICULE DE BREVET EUROPEEN

(11) **EP 2 648 939 B1**
(45) Date de publication et mention de la délivrance du brevet: **28.01.2015**
(21) Numéro de dépôt: 11784718.6
(22) Date de dépôt: 22.11.2011
(51) Int. Cl.: B60R 16/02, H02G 3/22, H02G 3/04

(54) **GOULOTTE DE RECEPTION D'ELEMENTS ALLONGES, SON PROCEDE DE MONTAGE ET ENSEMBLE COMPRENANT UN SUPPORT ET UNE TELLE GOULOTTE**
LEITUNG ZUR AUFNAHME VON LÄNGLICHEN ELEMENTEN, MONTAGEVERFAHREN DAFÜR UND ANORDNUNG MIT EINER HALTERUNG UND EINER SOLCHEN LEITUNG
CONDUIT FOR RECEIVING ELONGATE ELEMENTS, METHOD FOR MOUNTING SAME, AND ASSEMBLY COMPRISING A MOUNTING AND SUCH A CONDUIT

(30) Priorité: 06.12.2010 FR 1060134
(43) Date de publication de la demande: 16.10.2013
(73) Titulaire: A. RAYMOND et Cie, 38000 Grenoble (FR)
(72) Inventeur: ALBARAN, Jean-François, F-38760 Varces (FR); BHIRI, Ridha, F-38100 Grenoble (FR)
(74) Mandataire: RACKETTE Partnerschaft Patentanwälte
(86) Numéro de dépôt international: PCT/EP2011/070675
(87) Numéro de publication internationale: WO 2012/076330

(56) Documents cités:
- DE-A1-102005 015 075
- DE-C2- 4 447 719
- DE-U1- 8 605 411
- DE-U1-202008 005 734

## Description

La présente invention concerne une goulotte de réception d'éléments allongés, son procédé de montage sur un support, ainsi qu'un ensemble comprenant un support et une telle goulotte.

L'invention s'applique plus particulièrement à une goulotte destinée à être montée sur un support, constitué par un bâti de moteur de véhicule automobile. Dans un tel véhicule, de nombreux faisceaux électriques sont positionnés au voisinage du moteur. On conçoit donc qu'il est nécessaire de préserver leur intégrité, de manière à éviter notamment tout court-circuit.

A cet effet, il est connu de loger ces faisceaux électriques dans une goulotte, laquelle comprend en général un corps allongé délimitant un espace de réception de ces faisceaux. Cette goulotte est par ailleurs pourvue de moyens, assurant sa fixation sur le moteur.

On connaît, par EP-A-1 367 308, un dispositif de fixation d'objets allongés sur un support plat, qui comprend tout d'abord deux pièces d'appui sur ce support. Ces deux pièces, qui sont liées mutuellement de façon coulissante, supportent en outre deux demi-berceaux de réception des objets allongés.

Cette solution connue implique cependant certains inconvénients, en ce qu'elle s'applique exclusivement à des supports plats présentant des bords spécifiques. De plus, l'opérateur doit disposer d'un espace suffisant de part et d'autre du support, en vue d'une manipulation correcte des pièces d'appui. Ceci se révèle contraignant, lorsque ce dispositif doit être mis en place dans un encombrement restreint. Enfin, le blocage des objets allongés est uniquement assuré par des crans en matière plastique, de sorte que ces objets risquent de se détacher dans le temps, en particulier dans le cas de sollicitations importantes, dues par exemple aux vibrations.

US-A-2006/011381 décrit une goulotte pour le montage de conduits et de tubes, destinée aux avions. Cette goulotte comprend un corps de base, dans lequel est ménagée une échancrure de réception d'un élément de blocage, monté coulissant.

Dans cet agencement, l'élément de blocage mobile n'est pas verrouillé, alors que son guidage n'est pas assuré. En effet, seul le positionnement final de cet élément est assuré, lorsqu'il se trouve en bout de course. Le maintien assuré par un tel support n'est en outre pas de type positif, de sorte qu'il n'est pas pérenne, notamment en cas de sollicitations importantes sur le support ou la goulotte.

Enfin, DE 20 2008 005 734 décrit une goulotte comprenant un corps pourvu d'un premier élément fixe, permettant de bloquer la goulotte par rapport au support sur lequel elle doit être montée. Il est par ailleurs prévu un insert, monté coulissant par rapport au corps, lequel est équipé d'un second élément de blocage, qui est par conséquent mobile par rapport au corps. Le verrouillage mutuel du corps et de l'insert est réalisé, grâce à l'utilisation de crans. Une telle goulotte peut être montée sur des supports présentant des dimensions différentes.

Cette dernière solution, implique également certaines limites, liées en particulier à l'emploi des crans. Ceci ne permet en effet pas de s'affranchir de tout risque de désolidarisation intempestive. De plus, une telle liaison ne crée pas de mise en tension dans l'assemblage ainsi réalisé, ce qui ne permet pas d'assurer un blocage positif.

Ceci étant précisé, l'invention vise à remédier aux différents inconvénients de l'art antérieur évoqués ci-dessus Elle vise en particulier à proposer une goulotte qui est susceptible d'être solidarisée de façon fiable et durable sur un support, même lorsque ce dernier est implanté dans un environnement soumis à dé fortes vibrations, tel un moteur de véhicule automobile. L'invention vise également à proposer une telle goulotte, qui peut être montée de façon simple et rapide sur le support précité. Le préambule de la revendication est divulgué dans DE 0605411 U.

A cet effet, l'invention a pour objet une goulotte comme défini par la revendication 1.

Une goulotte selon l'invention peut présenter avantageusement les particularités suivantes :
- l'organe de blocage peut être déplacé de sa position reculée à sa position intermédiaire moyennant une unique action axiale, notamment manuelle.
- il est prévu des moyens d'arrêt de l'organe mobile, à la fois dans sa position reculée et dans sa position intermédiaire.
- les moyens d'arrêt comprennent un ergot, dont est équipé l'organe mobile, propre à coopérer avec un premier et un second crans, prévus sur le corps, lesquels correspondent aux positions respectivement reculée et intermédiaire.
- l'ergot est porté par un levier de l'organe mobile, ce levier possédant une extrémité d'actionnement, propre à dégager l'ergot hors du premier cran, de façon à permettre le déplacement de l'organe mobile vers la position intermédiaire.
- l'organe mobile de blocage est propre à se déplacer selon une direction longitudinale de déplacement, et cet organe mobile possède une extrémité d'appui contre le support, formant avec ladite direction un angle de dépouille compris entre 0 et 45° tout en étant strictement positif, de préférence entre 5 et 10°.
- il est prévu des moyens de positionnement transversal de l'organe mobile de blocage par rapport au support.
- les moyens de positionnement transversal comprennent un canal de positionnement, formé sur l'organe mobile, propre à coopérer avec une nervure ménagée sur le support.

L'invention a également pour objet un procédé de montage, sur un support, de la goulotte ci-dessus, dans lequel on place la goulotte contre le support, sensiblement dans la position finale qu'elle doit adopter, tout en maintenant l'organe mobile dans sa position reculée, on repousse l'organe mobile dans sa position intermédiaire, de façon à maintenir mutuellement la goulotte et le support, et on actionne les moyens de verrouillage, de façon à déplacer l'organe mobile dans sa position de blocage, et ainsi à bloquer la goulotte par rapport au support.

L'invention a enfin pour objet un ensemble comprenant un support et une goulotte telle que ci-dessus, cette goulotte étant montée sur ce support.

Selon une caractéristique avantageuse, le support comprend des moyens de positionnement transversal complémentaires, coopérant avec les moyens de positionnement transversal de l'organe mobile de blocage.

La présente invention sera mieux comprise et d'autres avantages apparaîtront à la lecture de la description détaillée d'un mode de réalisation pris à titre d'exemple nullement limitatif et illustré par les dessins annexés, dans lesquels :
La figure 1 est une vue en perspective, illustrant une goulotte conforme à l'invention ;
Les figures 2 et 3 sont des vues en perspective, illustrant sous deux angles différents un socle de maintien d'un verrou, appartenant à cette goulotte ;
Les figures 4 et 5 sont des vues en perspective, illustrant sous deux angles différents un verrou, appartenant à cette goulotte ;
La figure 6 est une vue de côté, illustrant le verrou des figures 4 et 5 ;
La figure 7 à 8 sont des vues en coupe longitudinale, illustrant le verrou monté sur son socle, respectivement tout d'abord dans une position reculée, puis dans une position intermédiaire, et enfin dans une position de blocage sur un support ; et
La figure 9 est une vue de côté, illustrant la position verrouillée de la goulotte.

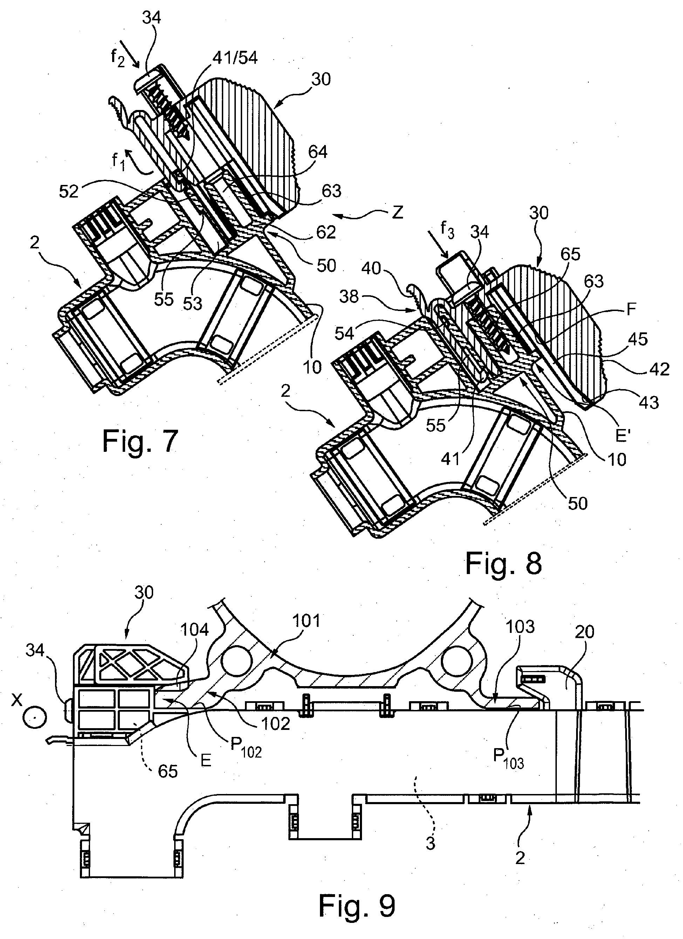

Les différentes figures illustrent une goulotte conforme à l'invention, désignée dans son ensemble par la référence 1, laquelle est destinée à être montée sur un support 101. Ce dernier, plus particulièrement visible sur la figure 9, est un bâti de moteur automobile dans l'exemple illustré. Cependant, l'invention trouve son application à d'autres types de supports, tels que par exemples des profilés métalliques, présentant notamment une forme de T ou de H.

Le support 101 est pourvu de deux oreilles 102 et 103, lesquelles définissent deux plans d'appui P₁₀₂ et P₁₀₃ afin d'assurer la fixation de la goulotte, comme on le verra dans ce qui suit. De plus, l'une 102 de ces oreilles est pourvue d'une nervure 104, permettant le positionnement mutuel de la goulotte et du support, comme cela sera également explicité plus loin.

La goulotte 1 est, dans l'exemple illustré, essentiellement réalisée par moulage de matériaux thermoplastiques sur des presses à injecter. Elle possède un corps 2 allongé, dont on note Y la direction principale. Ce corps, globalement en forme de U, définit une zone de réception 3 d'éléments allongés, notamment de type câbles, débouchant vers l'extérieur par deux ouvertures 4 et 5, formant entrée et sortie, ou vice versa. De façon habituelle, la fonction de cette goulotte est de protéger ces éléments allongés à l'égard d'agressions, telles que des accrochages entre fils, ou encore des coulures de liquides.

Dans l'exemple illustré, la zone de réception 3 est recouverte par un capot 6. Cependant, ce dernier est optionnel, auquel cas il est remplacé par tout moyen permettant la solidarisation des faisceaux par rapport à la goulotte, notamment de type adhésif.

La goulotte est pourvue d'une face frontale 10, dite de fixation, au niveau de laquelle s'effectue le montage sur le support 101. Cette face de fixation 10, qui s'étend selon la direction Y, est bordée par deux organes de blocage 20 et 30, qui vont maintenant être décrits plus en détail.

Le premier organe ou talon 20 est dénommé fixe, dans la mesure où il est relié de façon permanente et inamovible au corps 2, en étant notamment venu de moulage. Ce talon possède une saillie 21, définissant avec la face 10 en regard un premier espace 22, assurant le blocage du support selon la direction Y, dans un premier sens.

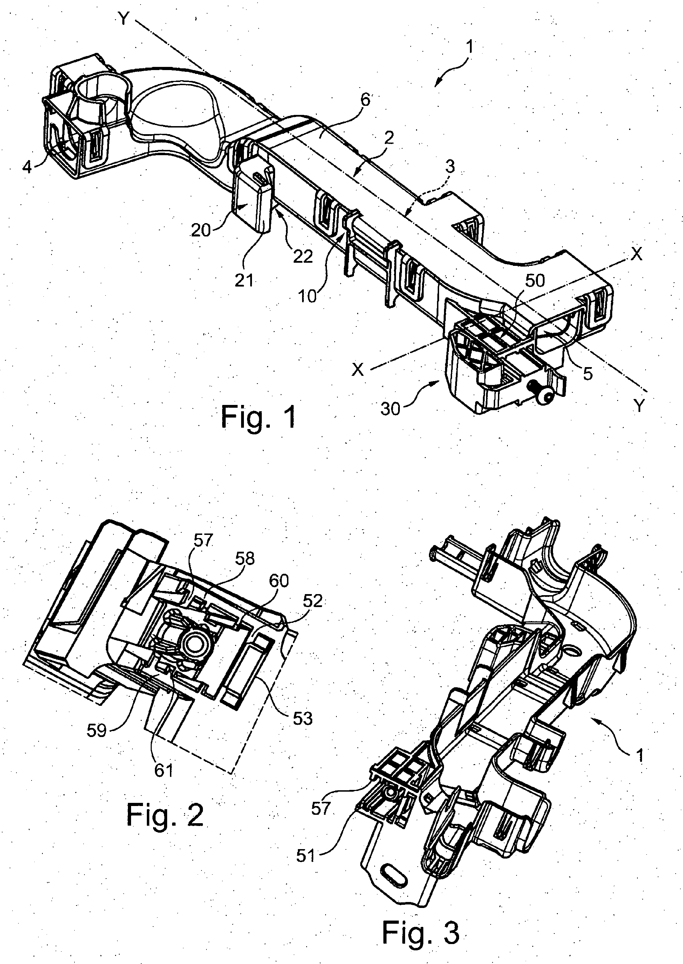

Le second organe ou verrou 30 est dénommé mobile, dans la mesure où il est monté par rapport au corps avec une possibilité de débattement axial, selon la direction Y. A cet effet, ce verrou est supporté par un socle 50, solidaire du corps de la goulotte, lequel est plus particulièrement décrit en référence aux figures 2 et 3, ainsi que 7 à 9.

Ce socle 50, formant organe de maintien du verrou 30, possède une forme à peu près parallélépipédique. Il est ajouré de façon à définir une chambre axiale 51, ouverte à l'opposé du talon 20, dont une première paroi 52, tournée vers le corps, définit avec celui-ci un espace intermédiaire 53 (voir figure 7). Cette paroi 52 est creusée d'une encoche 54, adjacente au débouché de la chambre, laquelle forme un premier cran, tout en possédant un épaulement 55 formant un second cran. On verra, dans ce qui suit, que la présence de l'espace intermédiaire 53 permet une avancée supplémentaire du verrou.

La paroi 57, opposée à celle 52, est échancrée de manière à permettre le passage de montants prévus sur le verrou 30, comme on le verra par la suite. Enfin, les deux autres parois 58 et 59 de la chambre sont munies de nervures internes 60 et 61, afin de guider le mouvement de ce verrou.

La chambre 51 possède un fond 62, à partir duquel s'étend axialement un fût 63, dont les parois définissent un espace central 64, permettant l'insertion d'une vis portée par le verrou. A cet effet, ces parois sont avantageusement réalisées en un matériau plastique tendre, de sorte que la vis peut y créer elle-même son propre taraudage lors de son introduction, de façon connue en soi.

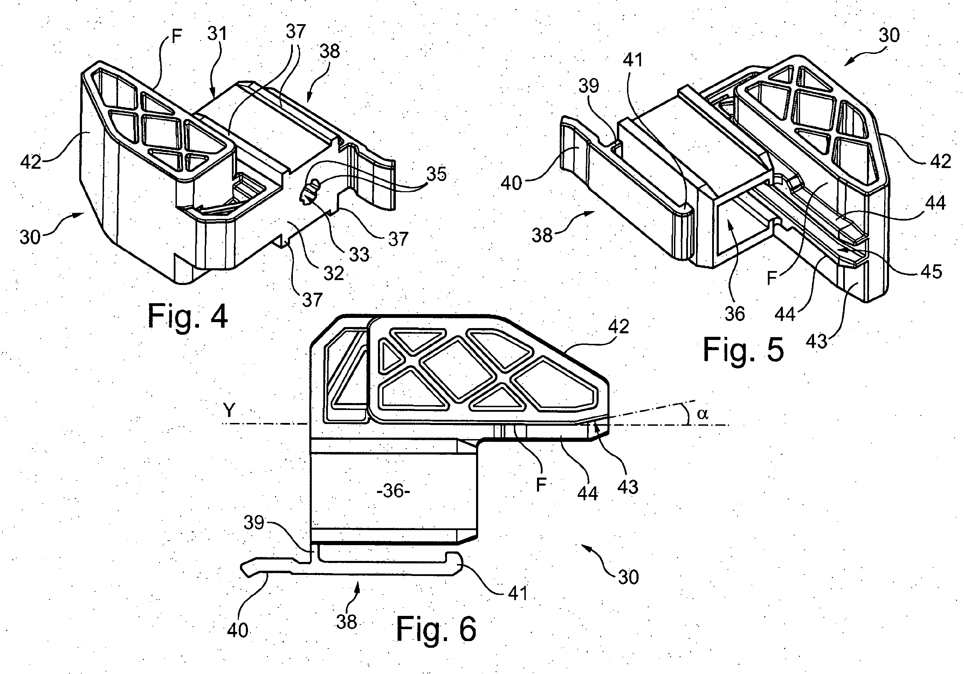

En référence désormais notamment aux figures 4 à 6, le verrou 30 comporte un boîtier 31, dont le profil extérieur correspond sensiblement au profil intérieur de la chambre 51. Ce boîtier présente un fond 32 creusé d'un orifice 33 de passage d'une vis 34 (voir figure 7), orifice dont le pourtour est équipé de bossages 35. Ces derniers permettent de maintenir la vis par rapport au boîtier, lorsque le verrou n'est pas encore fermement solidarisé sur son socle 50.

A l'opposé de ce fond, le boîtier est ouvert de façon à délimiter un logement 36 de réception du fût 63. Par ailleurs, sur deux de ses parois, ce boîtier est muni de rails 37 de guidage, propres à coopérer avec les nervures 60 et 61 précitées.

Un levier 38 s'étend à partir d'une troisième paroi de ce boîtier, via une charnière 39 réalisée par exemple par amincissement de matière. A l'une de ses extrémités, ce levier est pourvu d'une languette 40 d'actionnement, alors que son autre extrémité définit un ergot 41 propre à coopérer avec l'un ou l'autre des crans 54 et 55. Cet ergot 41 présente un bord arrondi, facilitant le passage du levier entre les deux crans.

A l'opposé du levier, le boîtier supporte un talon 42, dont la face F adjacente à ce boîtier s'étend selon la direction Y, comme le montre la figure 6. Cette face est terminée par zone 43 en dépouille, formant avec la direction Y un angle α, compris entre 0 et 45° tout en étant strictement positif, de préférence compris entre 5 et 10°. Ceci permet d'exercer un effort selon la direction X, à savoir transversalement à la direction principale de la goulotte, ce qui induit un effort d'appui de la face F sur le plan P₁₀₂ du support.

Deux nervures ou montants 44, portés par la face F du talon 42, définissent un canal 45. Ce dernier est propre à recevoir la nervure 104 prévue sur le support, en vue du bon positionnement de ce dernier par rapport à la goulotte. L'extrémité libre de ces montants 44 est également inclinée, de façon à être parallèle à la zone en dépouille 43.

La solidarisation mutuelle de la goulotte 1 et du support 101, décrits ci-dessus, va maintenant être explicitée dans ce qui suit.

Lors de sa fabrication, puis durant son transport éventuel, la goulotte se trouve dans l'agencement illustré à la figure 7. Le verrou 30 affecte une position reculée, à savoir qu'il laisse libre une zone Z, bordée par la face frontale 10 et le socle 50. Cette zone Z, dite d'accrochage, correspond à l'emplacement en lequel le support doit être bloqué. De plus, l'ergot 41 est inséré dans l'encoche 54, ce qui assure un maintien du verrou dans cette configuration.

En vue du montage proprement dit, l'opérateur insère tout d'abord l'oreille 103 du support 101 dans l'espace d'accrochage 22, défini par le talon fixe 20. Puis, il plaque la seconde oreille 102 contre le bord de la face frontale 10, adjacent au socle 50, à savoir au niveau de la zone Z. Lors de cette opération, il s'agit de placer la nervure 104 en regard du canal de positionnement 45.

Ensuite, tout en maintenant la goulotte 1 dans cette position avec une main, l'opérateur appuie sur la languette 40 avec l'autre main, afin de faire pivoter par élasticité le levier 38 autour de la charnière 39, selon la flèche f₁, ce qui libère l'ergot 41 hors de l'encoche 54. Dans ces conditions, l'opérateur peut alors repousser le verrou 30 axialement, selon la flèche f₂, jusqu'à ce que cet ergot coopère par encliquetage élastique avec le second cran, défini par l'épaulement 55. Ce mouvement permet également aux montants 44 de coiffer la nervure 104, ce qui assure le positionnement de la goulotte et du support selon une direction transversale, notée X à la figure 9.

Le verrou 30 se trouve alors dans une position intermédiaire, illustrée à la figure 8. Il est placé désormais en partie en regard de la face 10 du corps 2, de manière à créer avec cette dernière un espace E', dénommé de maintien préalable. Dans ces conditions, il n'est plus nécessaire pour l'opérateur de soutenir manuellement la goulotte, de sorte que ce dernier peut se saisir sans risque d'un outil non représenté, de type visseuse portative.

Grâce à cet outil, l'opérateur procède alors au vissage de la vis 34, de sorte que cette dernière pénètre dans les parois du fût 63. Au fur et à mesure de cette opération, la vis crée son propre taraudage, affecté de la référence 65 sur la figure 8. Ceci induit un déplacement axial du verrou par rapport à son socle, selon la flèche f₃ à la figure 8.

Au terme de ce mouvement, la zone en dépouille 43 du talon 42 vient en appui contre l'oreille 102, ce qui contribue à créer une force de blocage positive du verrou sur le support. A cet égard, on notera que la valeur de cette force est déterminée par l'intensité du couple de serrage de la vis 34. L'espace de blocage final, défini entre les faces respectives F et 10, appartenant au talon et au corps, est noté E.

L'invention n'est pas limitée à l'exemple décrit et représenté. Ainsi, on peut prévoir que la vis ne coopère pas avec des parois tendres d'un fût. Dans ce cas, le fond 62 de la chambre 51 supporte un élément fileté, lequel traversé le fond 32 du boîtier 31. Un élément taraudé complémentaire, rapporté à l'extrémité de l'élément fileté ci-dessus, peut alors être manoeuvré par l'opérateur, afin d'induire le déplacement du verrou par rapport à son socle.

De plus, on peut prévoir que les moyens de verrouillage ne font pas intervenir des moyens filetés.

L'invention permet d'atteindre les objectifs précédemment mentionnés.

En effet, elle permet tout d'abord une mise en place particulièrement simple de la goulotte sur le support. Comme cela ressort de ce qui précède, le monteur peut aisément disposer la goulotte sur le support avec ses deux mains, puis déplacer l'organe mobile selon un effort axial de faible intensité. Ensuite, grâce au pré-assemblage ainsi réalisé, il est aisé pour le monteur de se munir d'un outil pour actionner les moyens de verrouillage.

Par ailleurs, l'invention autorise un blocage satisfaisant de la goulotte sur le support, ce qui assure une liaison pérenne de ces deux éléments, même dans un environnement où sont présentés de fortes vibrations. En effet les moyens de verrouillage, notamment de type à filetage, induisent un effort positif de la goulotte sur le support, ce qui évite alors tout débattement intempestif de cette goulotte, en service.

Le fait de prévoir des moyens de positionnement transversal de la goulotte par rapport au support, est également avantageux. Ceci permet en effet de disposer mutuellement de façon précise ces deux éléments, selon une direction perpendiculaire à la direction de déplacement de l'organe mobile.

A cet égard, on notera que l'invention trouve également son application à une goulotte présentant de tels moyens de positionnement transversal, tout en étant équipée d'un organe de blocage mobile classique, tel que présenté dans le préambule de la présente description. Un tel organe mobile peut être déplacé de sa position reculée à sa position avancée au moyen de simples crans, sans présenter une position intermédiaire telle que décrite ci-dessus, et sans être pourvu de moyens de verrouillage.

L'invention concerne alors une goulotte destinée à être montée sur un support, notamment un bâti de moteur de véhicule automobile, cette goulotte comprenant un corps définissant une zone de réception pour des éléments allongés, notamment de type câbles, un premier organe de blocage sur le support, fixe par rapport au corps, ainsi qu'un second organe de blocage sur le support, mobile par rapport au corps entre une position reculée de mise en place du support, et une position avancée de blocage du support, dans laquelle cet organe mobile définit un espace de blocage avec le corps, cette goulotte comprenant en outre des moyens de positionnement transversal de l'organe mobile de blocage par rapport au support.

La goulotte telle que définie par les revendications.

## Revendications

1. Goulotte (1) destinée à être montée sur un support (101), notamment un bâti de moteur de véhicule automobile, cette goulotte (1) comprenant un corps (2) définissant une zone de réception (3) pour des éléments allongés, notamment de type câbles, un premier organe de blocage (20) sur ledit support (101), fixe par rapport audit corps (2), ainsi qu'un second organe de blocage (30) sur ledit support (101), mobile par rapport audit corps (2) entre une position reculée de mise en place dudit support (101), et une position avancée de blocage dudit support (101), dans laquelle ce second organe de blocage (30) définit un espace de blocage (E) avec ledit corps (2), en ce que ledit second organe de blocage (30) est propre à adopter une position intermédiaire, dans laquelle il définit avec ledit corps (2) un espace de maintien préalable (E') dudit support (101), ladite goulotte (1) comportant des moyens de verrouillage (34, 65) propres à déplacer ledit second organe de blocage (30) de sa position intermédiaire à sa position de blocage, **caractérisée en ce que** lesdits moyens de verrouillage comprennent des moyens filetés (34, 65) comprenant au moins un élément fileté (34) solidaire de, ou propre à être solidarisé à, l'un (30) parmi ledit second organe de blocage (30) et ledit corps (2), ainsi qu'au moins un élément taraudé (65) solidaire de, ou propre à être solidarisé à, l'autre (2) parmi ledit second organe de blocage (30) et ledit corps (2), cet élément taraudé (65) étant propre à coopérer avec un élément fileté (34) correspondant afin de déplacer ledit second organe de blocage (30) par rapport audit corps (2).

2. Goulotte (1) selon la revendication précédente, dans laquelle ledit second organe de blocage (30) peut être déplacé de sa position reculée à sa position intermédiaire moyennant une unique action axiale, notamment manuelle.

3. Goulotte (1) selon l'une des revendications précédentes, comprenant des moyens (41, 54, 55) d'arrêt dudit second organe de blocage (30), à la fois dans sa position reculée et dans sa position intermédiaire.

4. Goulotte (1) selon la revendication précédente, dans laquelle lesdits moyens d'arrêt comprennent un ergot (41), dont est équipé ledit second organe de blocage (30), propre à coopérer avec un premier (54) et un second (55) crans, prévus sur ledit corps (2), correspondant aux positions respectivement reculée et intermédiaire.

5. Goulotte (1) selon la revendication précédente, dans laquelle ledit ergot (41) est porté par un levier (38) dudit second organe de blocage (30), ce levier (38) possédant une extrémité (40) d'actionnement, propre à dégager ledit ergot (41) hors dudit premier cran (54), de façon à permettre le déplacement dudit second organe de blocage (30) vers ladite position intermédiaire.

6. Goulotte (1) selon l'une des revendications précédentes, dans laquelle ledit second organe de blocage (30) est propre à se déplacer selon une direction longitudinale de déplacement (Y), et ce second organe de blocage (30) possède une extrémité (43) d'appui contre ledit support (101), formant avec ladite direction longitudinale de déplacement (Y), un angle de dépouille (α) compris entre 0 et 45° tout en étant strictement positif, de préférence entre 5 et 10°.

7. Goulotte (1) selon l'une des revendications précédentes, comprenant des moyens de positionnement transversal (45) dudit second organe de blocage (30) par rapport audit support (101).

8. Goulotte (1) selon la revendication précédente, dans laquelle les moyens de positionnement transversal comprennent un canal de positionnement (45), formé sur ledit second organe de blocage (30), propre à coopérer avec une nervure (104) ménagée sur ledit support (101).

9. Procédé de montage, sur un support (101), d'une goulotte (1) conforme à l'une quelconque des revendications précédentes, dans lequel on place ladite goulotte (1) contre ledit support (101), sensiblement dans la position finale qu'elle doit adopter, tout en maintenant ledit second organe de blocage (30) dans sa position reculée, on repousse ledit second organe de blocage (30) dans sa position intermédiaire, de façon à maintenir mutuellement ladite goulotte (1) et ledit support (101), et on actionne lesdits moyens de verrouillage (34, 65), de façon à déplacer ledit second organe de blocage (30) dans sa position de blocage, et ainsi à bloquer ladite goulotte (1) par rapport audit support (101).

10. Ensemble comprenant un support (101), tel un bâti de moteur de véhicule automobile, et une goulotte (1) selon l'une quelconque des revendications 1 à 9, cette goulotte (1) étant montée sur ce support (101).

11. Ensemble selon la revendication précédente, comprenant une goulotte (1) selon l'une des revendications 7 ou 8, ledit support (101) comprenant des moyens de positionnement transversal complémentaires (104), coopérant avec les moyens de positionnement transversal (45) dudit second organe de blocage (30).

## Patentansprüche

1. Kanal (1), der dazu eingerichtet ist, an einem Trägerteil (101), insbesondere einem Motorgehäuse eines Kraftfahrzeugs, anbringbar zu sein, wobei der Kanal (1) über einen Körper (2), der einen Bereich zur Aufnahme (3) von länglichen Elementen, insbesondere nach Art von Kabeln, bildet, über ein erstes Blockierorgan (20) an dem Trägerteil (101), das in Bezug auf den Körper (2) fixiert ist, sowie über ein zweites Blockierorgan (30) an dem Trägerteil (101) verfügt, das in Bezug auf den Körper (2) zwischen einer zurückgeschobenen Stellung zum Anordnen des Trägerteils (101) und einer vorgeschobenen Stellung zum Blockieren des Trägerteils (101) beweglich ist, in der das zweite Blockierorgan (30) einen Blockierbereich (E) mit dem Körper (2) bildet, wobei das zweite Blockierorgan (30) dazu eingerichtet ist, eine Zwischenstellung einzunehmen, in der es mit dem Körper (2) einen Bereich zum vorläufigen Halten (E') des Trägerteils (101) bildet, wobei der Kanal (1) Verriegelungsmittel (34, 65) aufweist, die dazu eingerichtet sind, das zweite Blockierorgan (30) von seiner Zwischenstellung in seine Blockierstellung zu verschieben, **dadurch gekennzeichnet, dass** die Verriegelungsmittel Gewindemittel (34, 65) aufweisen, die wenigstens über ein Element mit Gewinde (34), das mit einem (30) aus der Gruppe des zweiten Blockierorgans (30) und des Körpers (2) einstückig ausgebildet oder zum Verbinden damit eingerichtet ist, sowie über ein Element mit Innengewinde (65) verfügt, das mit dem anderen (2) aus der Gruppe des zweiten Blockierorgans (30) und des Körpers (2) einstückig ausgebildet oder zum Verbinden damit eingerichtet ist, wobei das Element mit Innengewinde (65) dazu eingerichtet ist, mit einem dazugehörigen Element mit Gewinde (34) zusammenzuwirken, um das zweite Blockierorgan (30) in Bezug auf den Körper (2) zu verschieben.

2. Kanal (1) nach dem vorangehenden Anspruch, bei dem das zweite Blockierorgan (30) von der zurückgeschobenen Stellung in die Zwischenstellung durch eine einzige axiale, insbesondere manuelle, Betätigung verschiebbar ist.

3. Kanal (1) nach einem der vorangehenden Ansprüche, der Arretiermittel (41, 54, 55) für das zweite Blockierorgans (30) sowohl in der zurückgeschobenen Stellung als auch in der Zwischenstellung aufweist.

4. Kanal (1) nach dem vorangehenden Anspruch, bei dem die Arretiermittel eine Nase (41) aufweisen, mit der das zweite Blockierorgan (30) ausgestattet ist, die dazu eingerichtet ist, mit einer ersten (54) und einer zweiten (55) Nut zusammenzuwirken, die auf dem Körper (2) vorgesehen sind und den jeweils der zurückgeschobenen Stellung und der Zwischenstellung entsprechen.

5. Kanal (1) nach dem vorangehenden Anspruch, bei dem die Nase (41) von einem Hebel (38) des zweiten Blockierorgans (30) getragen ist, wobei der Hebel (38) ein Betätigungsende (40) aufweist, das dazu eingerichtet ist, die Nase (41) aus dem Eingriff mit der ersten Nut (54) zu lösen, um das Verschieben des zweiten Blockierorgans (30) in die Zwischenstellung zu ermöglichen.

6. Kanal (1) nach einem der vorangehenden Ansprüche, bei dem das zweite Blockierorgan (30) dazu eingerichtet ist, in eine Längsverschieberichtung (Y) verschiebbar zu sein, und wobei das zweite Blockierorgan (30) ein Anschlagende (43) gegen das Trägerteil (101) aufweist, das mit der Längsverschieberichtung (Y) einen strikt positiven freien Winkel (α) zwischen 0 und 45°, vorzugsweise zwischen 5 und 10°, bildet.

7. Kanal (1) nach einem der vorangehenden Ansprüche, der Mittel zur Querpositionierung (45) des zweiten Blockierorgans (30) in Bezug auf das Trägerteil (101) aufweist.

8. Kanal (1) nach dem vorangehenden Anspruch, bei dem die Mittel zur Querpositionierung einen Positionierungskanal (45) aufweisen, der auf dem zweiten Blockierorgan (30) gebildet und dazu eingerichtet ist, mit einer an dem Trägerteil (101) angebrachten Rippe (104) zusammenzuwirken.

9. Montageverfahren eines Kanals (1) gemäß einem der vorangehenden Ansprüche an einem Trägerteil (101), bei dem der Kanal (1) im Wesentlichen in der einzunehmenden Endstellung an dem Trägerteil (101) angeordnet wird, während das zweite Blockierorgan (30) in der zurückgeschobenen Stellung gehalten wird, das zweite Blockierorgan (30) in die Zwischenstellung zurückgeschoben wird, um den Kanal (1) und das Trägerteil (101) wechselseitig zu halten, und die Verriegelungsmittel (34, 65) betätigt werden, um das zweite Blockierorgan (30) in die Blockierstellung zu verschieben und so den Kanal (1) in Bezug auf das Trägerteil (101) zu blockieren.

10. Anordnung mit einem Trägerteil (101), wie einem Motorgehäuse eines Kraftfahrzeugs, und mit einem Kanal (1) nach einem der Ansprüche 1 bis 9, wobei der Kanal (1) an dem Trägerteil (101) angebracht ist.

11. Anordnung nach dem vorangehenden Anspruch, die einen Kanal (1) nach einem der Ansprüche 7 oder 8 aufweist, wobei das Trägerteil (101) zusätzliche Mittel zur Querpositionierung (104) aufweist, die mit den Mitteln zur Querpositionierung (45) des zweiten Blockierorgans (30) zusammenwirken.

## Claims

1. Conduit (1) intended to be mounted on a support (101), notably a motor vehicle engine mount, this conduit (1) including a body (2) defining an area (3) for receiving elongate elements, notably of cable type, a first immobilizing member (20) on said support (101) fixed relative to said body (2) and a second immobilizing member (30) on said support (101) movable relative to said body (2) between a retracted position for placing said support (101) and an advanced position for immobilizing said support (101), wherein this second immobilizing member (30) defines with said body (2) an immobilizing space (E), said second immobilizing member (30) is adapted to assume an intermediate position in which it defines with said body (2) a preliminary retaining space (E') for said support (101), and said conduit (10) includes locking means (34, 65) adapted to move said second immobilizing member (30) from its intermediate position to its immobilizing position, **characterized in that** said locking means include threaded means (34, 65) including at least one threaded member (34) secured to or adapted to be secured to one element (30) of the pair comprising said second immobilizing member (30) and said body (2) and at least one threaded member (65) secured to or adapted to be secured to the other element (2) of the pair comprising said second immobilizing member (30) and said body (2), this threaded member (65) being adapted to cooperate with a corresponding threaded member (34) in order to move said second immobilizing member (30) relative to said body (2).

2. Conduit (1) according to the preceding claim, wherein said second immobilizing member (30) can be moved from its retracted position to its intermediate position by means of a single, axial, notably manual operation.

3. Conduit (1) according to either one of the preceding claims, including means (41, 54, 55) for immobilizing said second immobilizing member (30) in its retracted position and in its intermediate position.

4. Conduit (1) according to the preceding claim, wherein said immobilizing means include a lug (41) on said second immobilizing member (30) adapted to cooperate with a first detent (54) and a second detent (55) on said body (2) respectively corresponding to the retracted and intermediate positions.

5. Conduit (1) according to the preceding claim, wherein said lug (41) is carried by a lever (38) of said second immobilizing member (30), this lever (38) having an actuating end (40) adapted to disengage said lug (41) from said first detent (54) to enable movement of said second immobilizing member (30) toward said intermediate position.

6. Conduit (1) according to any one of the preceding claims, wherein said second immobilizing member (30) is adapted to move in a longitudinal direction of movement (Y) and this second immobilizing member (30) has an end (43) bearing against said support (101) forming with said longitudinal direction of movement (Y) a strictly positive clearance angle (α) between 0 and 45 degrees, preferably between 5 and 10 degrees.

7. Conduit (1) according to any one of the preceding claims, including means (45) for transversely locating said second immobilizing member (30) relative to said support (101).

8. Conduit (1) according to the preceding claim, wherein the transverse locating means include a locating channel (45) on said second immobilizing member (30) adapted to cooperate with a rib (104) on said support (101).

9. Method for mounting a conduit (1) according to any one of the preceding claims on a support (101), wherein said conduit (1) is placed against said support (101) substantially in the final position that it is to assume while said second immobilizing member (30) is held in its retracted position, said second immobilizing member (30) is pushed into its intermediate position to hold said conduit (1) and said support (101) relative to each other, and said locking means (34, 65) are actuated to move said second immobilizing member (30) to its immobilizing position and thus to immobilize said conduit (1) relative to said support (101).

10. Assembly including a support (101) such as a motor vehicle engine mount and a conduit (1) according to any one of claims 1 to 9, this conduit (1) being mounted on this support (101).

11. Assembly according to the preceding claim, including a conduit (1) according to either one of claims 7 or 8, said support (101) including additional transverse locating means (104) cooperating with the transverse locating means (45) of said second immobilizing member (30).
